# EUROPÄISCHE PATENTSCHRIFT

(11) **EP 2 508 768 B1**
(45) Veröffentlichungstag und Bekanntmachung des Hinweises auf die Patenterteilung: **05.06.2013**
(21) Anmeldenummer: 11002309.0
(22) Anmeldetag: 21.03.2011
(51) Int. Cl.: F16C 25/08, F16F 1/32

(54) **Federscheibe sowie Lagervorrichtung mit einer Federscheibe**
Spring washer and bearing device with a spring washer
Disque ressort et dispositif de palier doté d'un disque ressort

(43) Veröffentlichungstag der Anmeldung: 10.10.2012
(73) Patentinhaber: Maxon Motor AG, 6072 Sachseln (CH)
(72) Erfinder: Teimel, Arnold, 6074 Giswil (CH)
(74) Vertreter: Grünecker, Kinkeldey, Stockmair & Schwanhäusser

(56) Entgegenhaltungen:
- EP-A1- 0 303 147
- EP-A1- 1 623 908
- WO-A1-02/092244
- CH-A- 240 887
- DE-A1- 10 214 276
- DE-A1-102004 041 074
- DE-U1- 29 801 110
- FR-A1- 2 608 708
- GB-A- 299 810
- US-A- 4 792 708
- US-A- 5 959 381

## Beschreibung

Die Erfindung betrifft eine Federscheibe sowie eine Lagervorrichtung nach dem Oberbegriff der unabhängigen Ansprüche. Eine derartige Federscheibe wird zur axialen Vorspannung von Wälzlagern verwendet. Die Federscheibe umfasst einen äußeren Ring und einen koaxial zum äußeren Ring angeordneten inneren Ring. Durch die beiden Ringe wird eine Achse definiert. Äußerer Ring und innerer Ring sind über mehrere federnde Verbindungsstege miteinander verbunden.

Derartige Federscheiben werden zur axialen Vorspannung eines Wälzlagers einer Lagervorrichtung eingesetzt. Eine derartige Lagervorrichtung umfasst üblicherweise ein feststehendes Bauteil, eine Welle und ein dazwischen angeordnetes Wälzlager. Ein äußerer Lagerring des Wälzlagers ist an dem feststehenden Bauteil angeordnet, und ein innerer Lagerring des Wälzlagers ist auf der Welle angeordnet.

Generell ist es aus dem Stand der Technik bekannt, Wälzlager mittels Federscheiben oder auch herkömmlichen Spiralfedern axial vorzuspannen. Die axiale Vorspannung ist bei vielen Anwendungen notwendig, da bei Wälzlagern, insbesondere bei Radial-Rillenkugellagern, ein radiales Spiel zwischen den Kugeln und dem äußeren bzw. inneren Lagerring herrscht. Dieses Spiel führt insbesondere bei hohen Drehzahlen zu erhöhten Vibrationen. Dadurch ist der Lauf des Lagers unruhig, bei längerem Betrieb kann auch Passungsrost durch Mischreibung zwischen den Kugeln und den Lagerringen auftreten. Durch axiale Vorspannung kann dieses radiale Spiel vermieden werden, da die Lagerkugeln durch die axiale Vorspannung unter einem definierten Kontaktwinkel zwischen der Kugeloberfläche und der Laufbahn an den Lagerringen anliegen.

Die axiale Vorspannung mittels herkömmlicher Spiraldruckfedern hat den Nachteil, dass Spiraldruckfedern relativ lang sind und daher ein großer Bauraum benötigt wird.

Daher werden bereits seit langer Zeit sogenannte Federscheiben zur axialen Vorspannung verwendet. Aus EP 0303147 A1 ist eine sogenannte gewellte Federscheibe bekannt, die als einstückiges Stanz-Biege-Teil ausgebildet ist und im Wesentlichen zwei konzentrisch zueinander angeordnete Ringe umfasst. Der innere Ring ist über mehrere Verbindungsstege mit dem äußeren Ring verbunden. Dabei ist der innere Ring plan ausgeführt, der äußere Ring hingegen ist gewellt, sodass er entlang seines Umfangs in axialer Richtung eine sinusförmige Kurve beschreibt. Die Federkraft wird in erster Linie durch die gewellte Form des äußeren Rings erzeugt. Bei Beaufschlagung mit einer axial wirkenden Kraft wird der äußere gewellte Ring flachgedrückt, so dass er bei maximaler Belastung in einer Ebene liegen würde. Derartige gewellte Federscheiben haben den Nachteil, dass im Laufe der Zeit ein sogenanntes Setzverhalten eintritt, das durch eine plastische Rückformung des gewellten Außenrings bedingt ist. Dies bedeutet, dass die Federkraft, die durch die gewellte Federscheibe erzeugt wird, bei gleicher Auslenkung im Laufe der Zeit zurückgeht.

Aus CH 240887 ist ebenfalls eine Federscheibe zur axialen Vorspannung eines Wälzlagers bekannt. Die Federscheibe besteht im Wesentlichen aus einem äußeren Ring, von dem nach innen kragende Stege vorstehen, die über den Umfang der Federscheibe gleichmäßig verteilt sind. Die freikragenden Stege sind zudem in axialer Richtung aufgebogen und werden bei axialer Krafteinwirkung in die Ebene des äußeren Rings zurückgedrückt.

Aus DE 10214276 A1 ist eine weitere Federscheibe bekannt, die in ihrer Wirkungsweise der Federscheibe aus CH 240887 ähnlich ist. Dort ist der durchgehende Ring jedoch innen angeordnet, wobei die federnden freikragenden Stege vom inneren Ring nach außen abstehen. Die federnden Stege sind ebenfalls axial aufgebogen.

Die DE 29801110 U1 zeigt eine Federscheibe, die ähnlich einer Spiralfeder als kegelschneckenförmiger Blechstreifen ausgebildet ist, der einen äußeren Ring mit einem inneren Ring verbindet. Da äußerer Ring und innerer Ring nur über einen einzigen spiralförmig verlaufenden Steg miteinander verbunden sind, sind die beiden Ringe nicht stabil konzentrisch zueinander positioniert und können sehr leicht gegeneinander verkippen. Eine über den gesamten Umfang gleichförmig wirkende Federkraft kann mit dieser Federscheibe nicht realisiert werden.

Eine Federscheibe der eingangs genannten Art schließlich ist aus DE 102004041074 A1 bekannt. Sie umfasst einen äußeren und einen inneren Ring, die konzentrisch zueinander liegen und über drei federnde Verbindungsstege miteinander verbunden sind. Äußerer und innerer Ring weisen einen axialen Versatz auf und liegen daher nicht in einer Ebene. Die drei federnden Verbindungsstege sind leicht spiralförmig ausgebildet, um für die gewünschte Federwirkung eine ausreichende Länge aufweisen zu können. Eine ähnliche Federscheibe dieser Art ist zudem aus WO 02/092244 A1 bekannt.

Um die Länge der federnden Verbindungsstege zu erhöhen, schlägt die US 4792708 vor, die Verbindungsstege geschlängelt auszuführen. Jeder Verbindungssteg verläuft über ein gewisses Stück des Umfangs der Federscheibe in einer Schlangenlinie zwischen dem inneren Ring und dem äußeren Ring hin und her.

Bei den aus dem Stand der Technik bekannten Federscheiben der eingangs genannten Art besteht das Problem, dass die Länge der Verbindungsstege zwischen dem inneren und dem äußeren Ring der Federscheibe zur Erreichung der gewünschten Federwirkung nicht beliebig in ihrer Länge variiert werden kann, falls wenig Bauraum insbesondere in radialer Richtung zur Verfügung steht. Die beispielsweise aus US 4792708 bekannte geschlängelte Ausführung der Verbindungsstege führt dazu, dass der innere Ring nicht mehr stabil und konzentrisch zum äußeren Ring gehalten wird. Es ist daher Aufgabe der vorliegenden Erfindung, die aus dem Stand der Technik bekannten Federscheiben weiter zu verbessern und insbesondere eine Möglichkeit anzugeben, die effektive Länge der federnden Elemente zur Erreichung einer gewünschten Federwirkung zu erhöhen, ohne einen stabilen und koaxialen Zusammenhalt zwischen dem inneren Ring und dem äußeren Ring zu gefährden. Es ist ferner Ziel der vorliegenden Erfindung, eine Federscheibe mit möglichst geringem Bauraum und geringer Änderung der Federkennlinie bei Auslenkung auf Anschlag anzugeben, die sich darüber hinaus günstig fertigen lässt.

Die Erfindung wird gelöst durch die Merkmale des unabhängigen Anspruchs 1. Demnach liegt dann eine erfindungsgemäße Lösung der Aufgabe vor, wenn ferner federnde freistehende Stege vorgesehen sind, die sich ausgehend von einem der beiden Ringe zwischen den Verbindungsstegen erstrecken und am gegenüberliegenden Ring ein freies Ende aufweisen, wobei die freistehenden Stege axial aufgebogen sind, so dass das freistehende Ende einen axialen Versatz aufweist.

Die Erfindung ermöglicht auf äußerst geringem Bauraum eine Verlängerung der effektiven Länge der federnden Elemente, wobei gleichzeitig ein stabiler Zusammenhalt zwischen äußerem Ring und innerem Ring, insbesondere in Bezug auf eine koaxiale Positionierung der beiden Ringe zueinander, gewährleistet ist. Selbst bei maximaler Auslenkung bzw. Belastung wird eine Veränderung der Federkennlinie bei der erfindungsgemäßen Federscheibe nahezu ausgeschlossen. Die erfindungsgemäße Federscheibe kann kostengünstig und auf einfache Art und Weise hergestellt werden.

Vorteilhafte Ausgestaltungen der vorliegenden Erfindung sind Gegenstand der Unteransprüche.

In einer bevorzugten Ausführungsform der vorliegenden Erfindung sind die Verbindungsstege und/oder die freistehenden Stege in Projektion auf eine Ebene senkrecht zur Achse der Federscheibe zumindest in einem Bereich gebogen. Dadurch ist auch bei radial klein bauenden Federscheiben eine für die Erreichung der gewünschten Federwirkung ausreichende Länge der federnden Stege möglich. Besonders bevorzugt sind die Verbindungsstege und/oder die freistehenden Stege dabei spiralförmig gebogen.

In einer weiteren besonders bevorzugten Ausführungsform der vorliegenden Erfindung weist das freie Ende der freistehenden Stege einen Fortsatz auf, der entlang des an das freie Ende angrenzenden Rings verläuft und axial zu diesem Ring zurückgebogen ist. Dadurch wird bei einer automatisierten Zuführung der Federscheiben, beispielsweise zur Montage eines Elektromotors, verhindert, dass sich die Federscheiben untereinander verhaken.

Gemäß einer weiteren besonders bevorzugten Ausführungsform sind in die Verbindungsstege axial vorstehende Sicken eingebracht. Durch die Sicken kann der Federweg in axialer Richtung bei Bedarf begrenzt werden.

Als besonders geeignete Materialien zur Herstellung der Federscheibe haben sich Pfinodal, Kupfer-Beryllium oder Federstahl, insbesondere Durimphy oder Durnico, herausgestellt.

In einer weiteren besonders bevorzugten Ausführungsform der vorliegenden Erfindung ist die Federscheibe mittels Stanzbiegen hergestellt. Dies ermöglicht eine äußerst einfache und kostengünstige Herstellung der erfindungsgemäßen Federscheibe.

Für einen stabilen Zusammenhalt des inneren Rings und des äußeren Rings sowie für eine möglichst symmetrische Federwirkung sind sowohl die Verbindungsstege als auch die freistehenden Stege gleichmäßig über den Umfang der Federscheibe verteilt. Besonders bevorzugt ist die gleiche Anzahl an freistehenden Stegen vorgesehen wie an Verbindungsstegen. Dadurch kann der zur Verfügung stehende Bauraum optimal genutzt werden. Für eine symmetrische Federwirkung ist es dabei von Vorteil, wenn jeweils ein freistehender Steg zwischen zwei federnden Verbindungsstegen vorgesehen ist.

Die Erfindung stellt ferner eine Lagervorrichtung bereit mit einem feststehenden Bauteil, einer Welle und einem dazwischen angeordneten Wälzlager, wobei ein äußerer Lagerring des Wälzlagers an dem feststehenden Bauteil, und ein innerer Lagerring des Wälzlagers auf der Welle angeordnet ist, und wobei erfindungsgemäß das Wälzlager durch eine erfindungsgemäße Federscheibe vorgespannt ist.

Gemäß einer bevorzugten Ausführungsform der vorliegenden Erfindung handelt es sich bei dem Wälzlager dabei um ein Radial-Rillenkugellager. Die erfindungsgemäße Lagervorrichtung eignet sich insbesondere, jedoch nicht ausschließlich, zur Lagerung der Welle eines Elektromotors, insbesondere eines Elektrokleinmotors.

In einer besonders bevorzugten Ausführungsform der vorliegenden Erfindung ist der innere Ring der Federscheibe fest mit der Welle verbunden, wobei sich die freistehenden Stege ausgehend vom äußeren Ring erstrecken, und wobei die freien Enden der freistehenden Stege federnd an dem inneren Lagerring anliegen. Dadurch, dass die Federscheibe fest mit der Welle verbunden ist, erfüllt die Federscheibe auch die Funktion einer axialen Sicherung, wofür bei aus dem Stand der Technik bekannten Lösungen ein zusätzliches Bauteil notwendig ist. Es wird darauf hingewiesen, dass die freien Enden der freistehenden Stege sowohl direkt als auch indirekt an dem inneren Lagerring anliegen können.

In einer weiteren besonders bevorzugten Ausführungsform der vorliegenden Erfindung ist der äußere Ring der Federscheibe fest mit dem feststehendem Bauteil verbunden, wobei sich die freistehenden Stege ausgehend vom inneren Ring erstrecken, und wobei die freien Enden der freistehenden Stege federnd an dem äußeren Lagerring anliegen. Auch bei dieser Lösung ist ein zusätzliches Bauteil zur axialen Sicherung nicht erforderlich. Auch hier sei darauf hingewiesen, dass die freien Enden der freistehenden Stege sowohl direkt als auch indirekt an dem äußeren Lagerring anliegen können.

Eine einfache und kostengünstige Montage wird erzielt, wenn der jeweils fest mit der Welle bzw. dem feststehenden Bauteil verbundene Ring mit der Welle bzw. dem feststehenden Bauteil entweder verschweißt, verpresst oder verklebt ist.

in einer weiteren bevorzugten Ausbildung der vorliegenden Erfindung ist zwischen den freien Enden der freistehenden Stege und dem jeweils anliegenden Lagerring eine Anlaufscheibe angeordnet. Die freistehenden Stege liegen dabei indirekt an dem jeweiligen Lagerring an. Durch Vorsehen einer Anlaufscheibe wird über den gesamten Umfang eine möglichst gleichmäßige Vorspannung erzielt.

Äusführungsbeispiele der vorliegenden Erfindung werden im Folgenden anhand von Zeichnungen näher erläutert.

Es zeigen:
- Figur 1: eine Draufsicht auf ein erstes Ausführungsbeispiel einer erfindungsgemäßen Federscheibe,
- Figur 2: eine Schrägansicht der erfindungsgemäßen Federscheibe aus Figur 1,
- Figur 3: ein axialer Schnitt der erfindungsgemäßen Federscheibe aus den Figuren 1 und 2,
- Figur 4: eine erfindungsgemäße Lagervorrichtung mit einer Federscheibe gemäß dem ersten Ausführungsbeispiel aus den Figuren 1 bis 3,
- Figur 5: eine Draufsicht auf ein zweites Ausführungsbeispiel einer erfindungsgemäßen Federscheibe,
- Figur 6: eine Schrägansicht der erfindungsgemäßen Federscheibe aus Figur 5,
- Figur 7: ein axialer Schnitt der erfindungsgemäßen Federscheibe aus den Figuren 5 und 6, und
- Figur 8: eine Lagervorrichtung mit der erfindungsgemäßen Federscheibe aus den Figuren 5 bis 7.

Für die folgenden Ausführungen gilt, dass gleiche Teile mit gleichen Bezugszeichen bezeichnet sind.

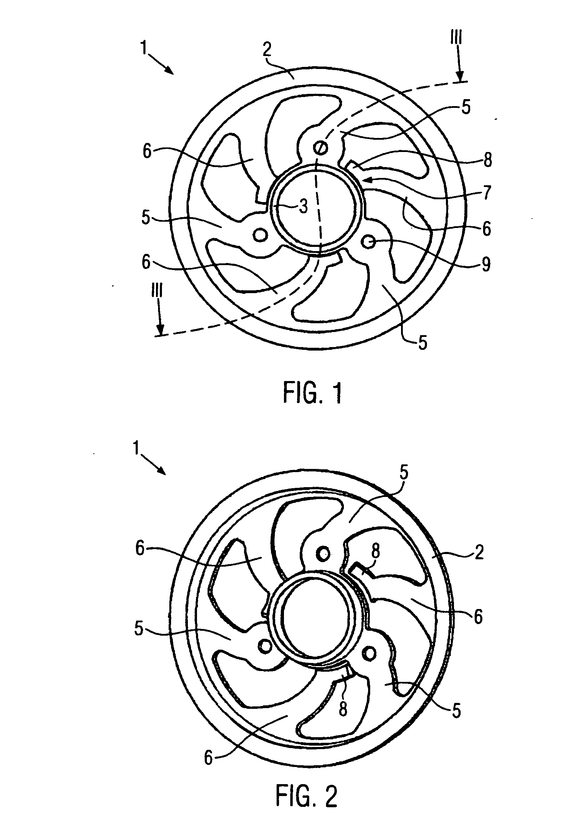

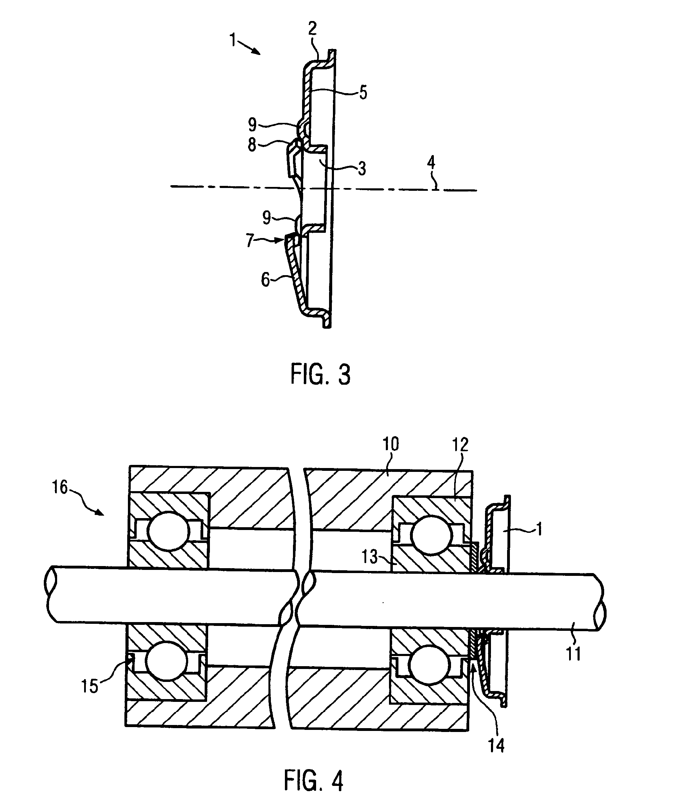

Die Figuren 1 bis 3 zeigen ein erstes Ausführungsbeispiel einer erfindungsgemäßen Federscheibe 1. Die Federscheibe 1 besteht aus einem äußeren Ring 2 und einem inneren Ring 3, die konzentrisch zueinander angeordnet sind und über drei Verbindungsstege 5 miteinander verbunden sind. Wie aus Figur 3 hervorgeht, liegen die Verbindungsstege 5 in einer Ebene. Die beiden Ringe, also der äußere und der innere Ring, sind aus Gründen der Stabilität als kurze zylindrische Hülsenabschnitte ausgebildet. Der äußere Rand des äußeren Rings ist zudem um 90 Grad nach außen gebogen, wodurch die Stabilität des Bauteils weiter gesteigert wird. Die gezeigten Verbindungsstege 5 sind gleichmäßig über den Umfang der Federscheibe 1 verteilt und verlaufen leicht spiralförmig vom inneren Ring 3 ausgehend hin zum äußeren Ring 2.

Zwischen jeweils zwei der festen Verbindungsstege 5 ist ferner je ein freistehender federnder Steg 6 angeordnet, der sich ausgehend vom äußeren Ring nach innen hin erstreckt und ebenfalls spiralförmig verläuft. Am inneren Ring 3 weisen die freistehenden Stege 6 ein freies Ende 7 auf, an dem ein Fortsatz 8 entlang des inneren Rings 3 verläuft. Figur 3 gibt zu erkennen, dass die federnden freistehenden Stege 6 nicht in der selben Ebene liegen wie die festen Verbindungsstege 5 sondern in axialer Richtung aufgebogen sind, so dass deren freies Ende 7 zu den Verbindungsstegen 6 bzw. den beiden Ringen einen axialen Versatz aufweist.

Zur Erreichung der Federwirkung der Federscheibe 1 tragen sowohl die festen Verbindungsstege 5 als auch die freistehenden Stege 6 bei. Die Federwirkung wird somit zwischen den freien Enden 7 der freistehenden Stege 6 und dem inneren Ring 3 erzeugt. In Figur 3 ist ferner die Achse 4 der Federscheibe 1 dargestellt. Sie bildet zugleich die Achse der beiden Ringe 2 und 3, die konzentrisch zueinander angeordnet sind. In die Verbindungsstege 5 sind möglichst nahe des inneren Rings 3 axial vorstehende Sicken eingeprägt, die den Federweg der Federscheibe 1 begrenzen. Diese Sicken sind mit dem Bezugszeichen 9 bezeichnet. Ebenfalls in Figur 3 ist zu erkennen, dass die in Umfangsrichtung verlaufenden Fortsätze 8 der freien Enden 7 der freistehenden Stege 6 axial in Richtung des inneren Rings 3 zurückgebogen sind. Diese Fortsätze 8 verhindern, dass sich mehrere Federscheiben 1 ineinander verhaken. Dies ist zum Beispiel wichtig bei der automatisierten Zufuhr der erfindungsgemäßen Federscheiben während der Montage.

Figur 4 zeigt eine Lagervorrichtung 16, bei der das rechte Lager mit Hilfe einer erfindungsgemäßen Federscheibe 1 gemäß den Figuren 1 bis 3 axial vorgespannt ist. Die Lagervorrichtung umfasst ein hohlzylindrisches feststehendes Bauteil 10 und eine koaxial dazu angeordnete rotierende Welle 11. Eine derartige Lagervorrichtung wird beispielsweise bei Elektromotoren benötigt. Die rotierende Welle 11 ist am linken Ende über ein Festlager 15 drehbar in dem feststehenden Bauteil 10 gelagert. Das feststehende Lager 15 ist als RillenKugellager ausgebildet. Es umfasst einen äußeren sowie einen inneren Lagerring, wobei der äußere Lagerring fest mit dem feststehenden Bauteil 10, und der innere Lagerring fest mit der Welle 11 verbunden ist. Am rechten Ende befindet sich das Loslager, ebenfalls bestehend aus einem äußeren Lagerring 12 und einem inneren Lagerring 13. Der äußere Lagerring 12 ist fest mit dem feststehenden Bauteil 10 verbunden, der innere Lagerring 13 hingegen ist axial verschieblich auf der Welle 11 angeordnet. Der innere Lagerring 13 ist mittels der erfindungsgemäßen Federscheibe 1 axial nach links vorgespannt. Die Federscheibe 1 ist hierzu über den inneren Ring 3 fest mit der Welle 11 verbunden. Die Verbindung kann beispielsweise mittels Verschweißung, Verklebung oder Verpressung hergestellt sein. Die axiale Federkraft auf den inneren Lagerring 13 wird von den freien Enden 7 der freistehenden Stege 6 ausgeübt, die über eine Anlaufscheibe 14 an dem inneren Lagerring 13 anliegen. Durch die Federkraft der Federscheibe 1 wird auch der innere Lagerring des linken Festlagers 15 axial nach rechts vorgespannt.

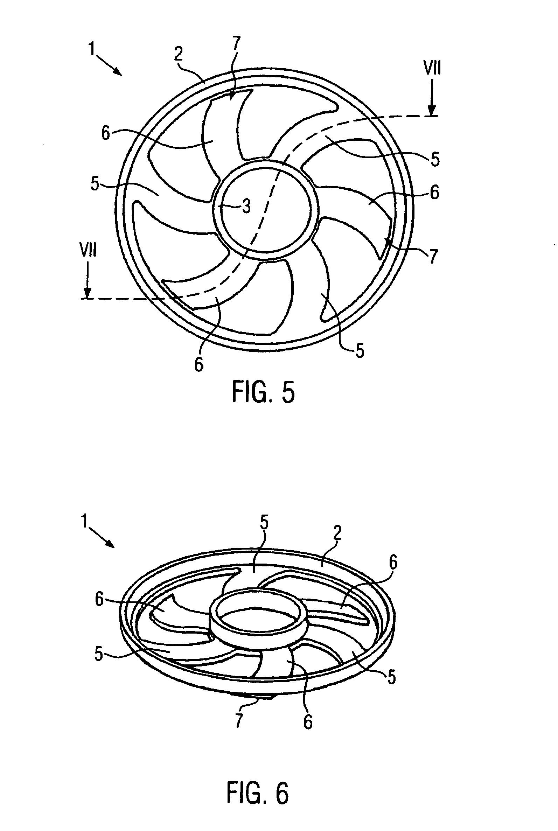

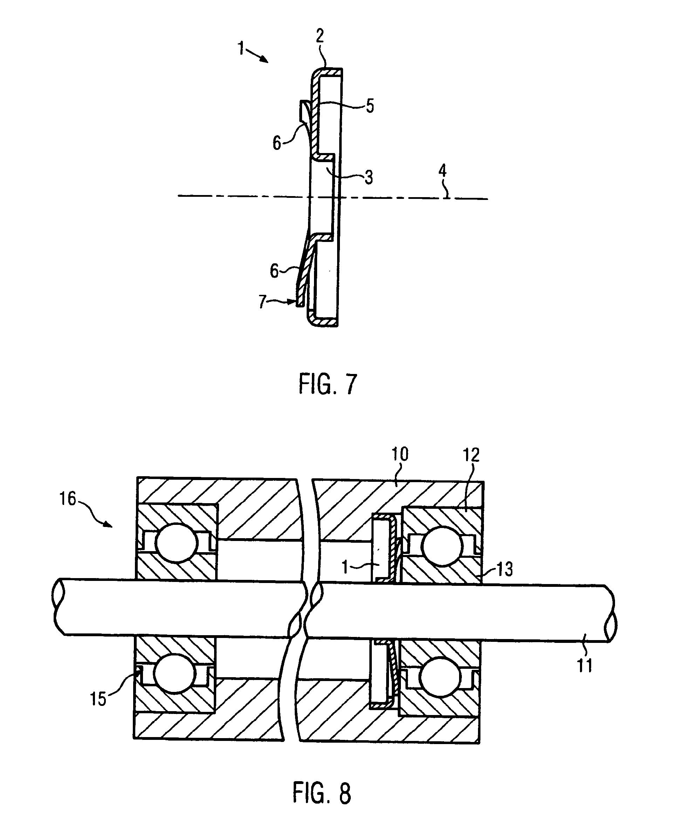

Ein zweites Ausführungsbeispiel einer erfindungsgemäßen Federscheibe 1 ist in den Figuren 5 bis 7 dargestellt. Hier sind die freistehenden Stege 6 nicht mit dem äußeren Ring 2 fest verbunden, sondern mit dem inneren Ring 3. Die freien Enden 7 der freistehenden Stege 6 sind somit am äußeren Ring 2 der Federscheibe 1 angeordnet. Wie in Figur 7 zu erkennen ist, sind auch die freistehenden Stege 6 dieses Ausführungsbeispiels axial aufgebogen, sodass deren freie Enden 7 im entspannten Zustand der Federscheibe 1 einen axialen Versatz zur Ebene der festen Verbindungsstege 5 aufweisen. Auch bei diesem Ausführungsbeispiel verlaufen die federnden Verbindungsstege 5 und die federnden freistehenden Stege 6 leicht spiralförmig.

Figur 8 zeigt eine Lagervorrichtung 16, ähnlich der Lagervorrichtung aus Figur 4, bei welcher die axiale Vorspannung des Loslagers mit einer Federscheibe gemäß dem Ausführungsbeispiel in den Figuren 5 bis 7 erzielt wird. Bei der in Figur 8 gezeigten Lagervorrichtung 16 ist der innere Lagerring 13 des rechten Loslagers ebenfalls fest mit der Welle 11 verbunden, wohingegen der äußere Lagerring 12 des rechten Loslagers axial verschieblich im feststehenden Bauteil 10 gehalten ist. Der äußere Ring 2 der Federscheibe 1 ist fest mit einem nicht bezeichneten Flansch des feststehenden Bauteils 10 verbunden. Auch hier kommt vorzugsweise eine Verschweißung, eine Verklebung oder eine Verpressung zum Einsatz. Die Federkraft der Federscheibe 1 wird von den freien Enden 7 der freistehenden Stege 6 auf den äußeren Lagerring 12 des rechten Loslagers ausgeübt. Der innere Ring 3 der Federscheibe 1 ist bei diesem Ausführungsbeispiel nicht fest mit der Welle 11 verbunden, sondern gegenüber der Welle 11 axial frei verschieblich. Vorzugsweise besteht daher zwischen der Welle 11 und dem inneren Ring 3 der Federscheibe 1 ein geringes Spiel.

Die erfindungsgemäßen Federscheiben sowie die erfindungsgemäßen Lagervorrichtungen eignen sich vorzugsweise, jedoch nicht ausschließlich, für den Einsatz in Elektrokleinmotoren.

## Patentansprüche

1. Federscheibe (1) zur axialen Vorspannung von Wälzlagern, mit einem äußeren Ring (2), einem koaxial zum äußeren Ring (2) angeordneten inneren Ring (3) und einer durch die beiden Ringe definierten Achse (4), wobei äußerer Ring (2) und innerer Ring (3) über mehrere federnde Verbindungsstege (5) miteinander verbunden sind, und wobei äußerer Ring (2) und innerer Ring (3) als kurze zylindrische Hülsenabschnitte ausgebildet sind, **dadurch gekennzeichnet, dass** ferner federnde freistehende Stege (6) vorgesehen sind, die sich ausgehend von einem der beiden Ringe zwischen den Verbindungsstegen (5) erstrecken und am gegenüberliegenden Ring ein freies Ende (7) aufweisen, wobei die freistehenden Stege (6) axial aufgebogen sind, so dass das freie Ende (7) einen axialen Versatz aufweist.

2. Federscheibe (1) nach Anspruch 1, **dadurch gekennzeichnet, dass** die Verbindungsstege (5) und/oder die freistehenden Stege (6) in Projektion auf eine Ebene senkrecht zur Achse (4) zumindest in einem Bereich gebogen sind.

3. Federscheibe (1) nach einem der Ansprüche 1 oder 2, **dadurch gekennzeichnet, dass** das freie Ende (7) der freistehenden Stege (6) einen Fortsatz (8) aufweist, der entlang des an das freie Ende (7) angrenzenden Rings verläuft und axial zu diesem Ring zurückgebogen ist.

4. Federscheibe (1) nach einem der Ansprüche 1 bis 3, **dadurch gekennzeichnet, dass** in die Verbindungsstege (5) axial vorstehende Sicken (9) eingebracht sind.

5. Federscheibe (1) nach einem der Ansprüche 1 bis 4, **dadurch gekennzeichnet, dass** die Federscheibe (1) aus Pfinodal, Kupfer-Beryllium oder einem Federstahl, insbesondere Durimphy oder Dumico, hergestellt ist.

6. Federscheibe (1) nach einem der Ansprüche 1 bis 5, **dadurch gekennzeichnet, dass** die Federscheibe (1) mittels Stanzbiegen hergestellt ist.

7. Lagervorrichtung (16) mit einem feststehenden Bauteil (10), einer Welle (11) und einem dazwischen angeordneten Wälzlager, wobei ein äußerer Lagerring (12) des Wälzlagers an dem feststehenden Bauteil (10), und ein innerer Lagerring (13) des Wälzlagers auf der Welle (11) angeordnet ist, und wobei das Wälzlager durch eine Federscheibe (1), insbesondere nach einem der Ansprüche 1 bis 6, axial vorgespannt ist, wobei die Federscheibe einen äußeren Ring (2), einen koaxial zum äußeren Ring (2) angeordneten inneren Ring (3) und eine durch die beiden Ringe definierte Achse (4) aufweist, und wobei äußerer Ring (2) und innerer Ring (3) über mehrere federnde Verbindungsstege (5) miteinander verbunden sind, **dadurch gekennzeichnet, dass** ferner federnde freistehende Stege (6) vorgesehen sind, die sich ausgehend von einem der beiden Ringe zwischen den Verbindungsstegen (5) erstrecken und am gegenüberliegenden Ring ein freies Ende (7) aufweisen, wobei die freistehenden Stege (6) axial aufgebogen sind, so dass das freie Ende (7) einen axialen Versatz aufweist, und wobei sowohl die Verbindungsstege (5) als auch die freistehenden Stege (6) zur Vorspannung beitragen.

8. Lagervorrichtung (16) nach Anspruch 7, **dadurch gekennzeichnet, dass** der innere Ring (3) der Federscheibe (1) fest mit der Welle (11) verbunden ist, wobei sich die freistehenden Stege (6) ausgehend vom äußeren Ring (2) erstrecken, und wobei die freien Enden (7) der freistehenden Stege (6) federnd an dem inneren Lagerring (13) anliegen.

9. Lagervorrichtung (16) nach Anspruch 7, **dadurch gekennzeichnet, dass** der äußere Ring (2) der Federscheibe (1) fest mit dem feststehenden Bauteil (10) verbunden ist, wobei sich die freistehenden Stege (6) ausgehend vom inneren Ring (3) erstrecken, und wobei die freien Enden (7) der freistehenden Stege (6) federnd an dem äußeren Lagerring (12) anliegen.

10. Lagervorrichtung (16) nach einem der Ansprüche 8 oder 9, **dadurch gekennzeichnet, dass** der jeweils fest mit der Welle (11) bzw. dem feststehenden Bauteil (10) verbundene Ring mit der Welle (11) bzw. dem feststehenden Bauteil (10) entweder verschweißt, verpresst oder verklebt ist.

11. Lagervorrichtung (16) nach einem der Ansprüche 7 bis 10, **dadurch gekennzeichnet, dass** zwischen den freien Enden (7) der freistehenden Stege (6) und dem jeweils anliegenden Lagerring eine Anlaufscheibe (14) angeordnet ist.

## Claims

1. A spring washer (1) for axially pretensioning anti-friction bearings, with an outer ring (2), an inner ring (3) coaxially arranged with respect to the outer ring (2), and an axis (4) defined by the two rings, the outer ring (2) and the inner ring (3) being connected together by means of a plurality of resilient connecting webs (5) and the outer ring (2) and the inner ring (3) taking the form of short cylindrical tube portions, **characterised in that** resilient cantilevered webs (6) are also provided, which extend from one of the two rings between the connecting webs (5) and have a free end (7) at the opposing ring, the cantilevered webs (5) being axially bent up, such that the free end (7) has an axial offset.

2. A spring washer (1) according to claim 1, **characterised in that** the connecting webs (5) and/or the cantilevered webs (6) are bent at least in one region in a projection onto a plane perpendicular to the axis (4).

3. A spring washer (1) according to either one of claims 1 or 2, **characterised in that** the free ends (7) of the cantilevered webs (6) have an extension (8), which runs along the ring adjacent to the free end (7) and is bent back axially with respect to this ring.

4. A spring washer (1) according to any one of claims 1 to 3, **characterised in that** axially protruding beads (9) are introduced into the connecting webs (5).

5. A spring washer (1) according to any one of claims 1 to 4, **characterised in that** the spring washer (1) is manufactured from Pfinodal, copper beryllium or a spring steel, in particular Durimphy or Durnico.

6. A spring washer (1) according to any one of claims 1 to 5, **characterised in that** the spring washer (1) is manufactured by means of stamp-bending.

7. A bearing device (16) with a stationary component (10), a shaft (11), and an anti-friction bearing arranged therebetween, an outer bearing ring (12) of the anti-friction bearing being arranged at the stationary component (10) and an inner bearing ring (13) of the anti-friction bearing being arranged on the shaft (11), and the anti-friction bearing being axially pretensioned by a spring washer (1), particularly according to any one of claims 1 to 6, the spring washer having an outer ring (2), an inner ring (3) coaxially arranged with respect to the outer ring (2), and an axis (4) defined by the two rings, and the outer ring (2) and the inner ring (3) being connected together by means of a plurality of resilient connecting webs (5), **characterised in that** resilient cantilevered webs (6) are also provided, which extend from one of the two rings between the connecting webs (5) and have a free end (7) at the opposing ring, the cantilevered webs (6) being axially bent up such that the free end (7) has an axial
offset, and both the connecting webs (5) and the cantilevered webs (6) contributing to the pretensioning.

8. A bearing device (16) according to claim 7, **characterised in that** the inner ring (3) of the spring washer (1) is firmly connected to the shaft (11), the cantilevered webs (6) extending from the outer ring (2) and the free ends (7) of the cantilevered webs (6) resting resiliently against the inner bearing ring (13).

9. A bearing device (16) according to claim 7, **characterised in that** the outer ring (2) of the spring washer (1) is firmly connected to the stationary component (10), the cantilevered webs (6) extending from the inner ring (3) and the free ends (7) of the cantilevered webs (6) resting resiliently against the outer bearing ring (12).

10. A bearing device (16) according to either one of claims 8 or 9, **characterised in that** the ring which is firmly connected to the shaft (11) or the stationary component (10) is either welded, pressed or adhesively bonded respectively to the shaft (11) or the stationary component (10).

11. A bearing device (16) according to any one of claims 7 to 10, **characterised in that** a thrust washer (14) is arranged between the free ends (7) of the cantilevered webs (6) and the bearing ring resting respectively thereagainst.

## Revendications

1. Disque ressort (1) pour la mise sous tension axiale de roulements mécaniques, comportant une bague externe (2), une bague interne (3) coaxiale par rapport à la bague externe (2) et un axe (4) défini par les deux bagues, dans lequel la bague externe (2) et la bague interne (3) sont reliées entre elles par plusieurs traverses de liaison élastiques (5), et dans lequel la bague externe (2) et la bague interne (3) sont constituées sous forme de courtes sections de manchon cylindrique, **caractérisé en ce que** des traverses libres élastiques (6) sont en outre pourvues, qui s'étendent depuis l'une des deux bagues entre les traverses de liaison (5) et comportent une extrémité libre sur la bague opposée (7), dans lequel les traverses libres (6) sont incurvées axialement de telle sorte que l'extrémité libre (7) présente un décalage axial.

2. Disque ressort (1) selon la revendication 1, **caractérisé en ce que** dans une projection sur un plan perpendiculaire à l'axe (4), les traverses de liaison (5) et/ou les traverses libres (6) sont incurvées au moins sur une section.

3. Disque ressort (1) selon l'une des revendications 1 ou 2, **caractérisé en ce que** l'extrémité libre (7) des traverses libres (6) comporte une extension (8) qui s'étend le long de la bague adjacente à l'extrémité libre (7) et est incurvée axialement en sens inverse par rapport à cette bague.

4. Disque ressort (1) selon l'une des revendications 1 à 3, **caractérisé en ce que** des protubérances saillantes axiales (9) sont formées dans les traverses de liaison (5).

5. Disque ressort (1) selon l'une des revendications 1 à 4, **caractérisé en ce que** le disque ressort (1) est fabriqué en alliage Pfinodal, en alliage cuivre-béryllium ou en acier à ressort, en particulier en acier Durimphy ou Durnico.

6. Disque ressort (1) selon l'une des revendications 1 à 5, **caractérisé en ce que** le disque ressort (1) est fabriqué par estampage et pliage.

7. Dispositif de roulement mécanique (16) comportant un composant fixe (10), un axe (11) et un roulement mécanique intercalé entre eux, dans lequel une bague de roulement externe (12) du roulement mécanique est agencée sur le composant fixe (10), et une bague de roulement interne (13) du roulement mécanique est agencée sur l'axe (11), et dans lequel le roulement mécanique est mis sous tension axialement par un disque ressort (1), en particulier selon l'une des revendications 1 à 6, dans lequel le disque ressort comporte une bague externe (2), une bague interne (3) coaxiale par rapport à la bague externe (2) et un axe (4) défini par les deux bagues, et dans lequel la bague externe (2) et la bague interne (3) sont reliées entre elles par plusieurs traverses de liaison élastiques (5), **caractérisé en ce que** des traverses libres élastiques (6) sont en outre pourvues, qui s'étendent depuis l'une des deux bagues entre les traverses de liaison (5) et comportent une extrémité libre (7) sur la bague opposée, dans lequel les traverses libres (6) sont incurvées axialement de telle sorte que l'extrémité libre (7) présente un décalage axial, et dans lequel aussi bien les traverses de liaison (5) que les traverses libres (6) contribuent à la mise sous tension.

8. Dispositif de roulement mécanique (16) selon la revendication 7, **caractérisé en ce que** la bague interne (3) du disque ressort (1) est fixée à l'axe (11), dans lequel les traverses libres (6) s'étendent depuis la bague externe (2), et dans lequel les extrémités libres (7) des traverses libres (6) sont appuyées élastiquement contre la bague de roulement interne (13).

9. Dispositif de roulement mécanique (16) selon la revendication 7, **caractérisé en ce que** la bague externe (2) du disque ressort (1) est fixée au composant fixe (10), dans lequel les traverses libres (6) s'étendent depuis la bague interne (3), et dans lequel les extrémités libres (7) des traverses libres (6) sont appuyées élastiquement contre la bague de roulement externe (12).

10. Dispositif de roulement mécanique (16) selon l'une des revendications 8 ou 9, **caractérisé en ce que** la bague fixée respectivement à l'axe (11) ou au composant fixe (10) est soit soudée, sertie ou collée à l'axe (11) ou au composant fixe (10).

11. Dispositif de roulement mécanique (16) selon l'une des revendications 7 à 10, **caractérisé en ce qu'**une bague de butée (14) est agencée entre les extrémités libres (7) des traverses libres (6) et la bague de roulement respective adjacente.
